# EUROPÄISCHE PATENTSCHRIFT

(11) **EP 0 635 539 B1**
(45) Veröffentlichungstag und Bekanntmachung des Hinweises auf die Patenterteilung: **29.12.1997**
(21) Anmeldenummer: 94810412.0
(22) Anmeldetag: 12.07.1994
(51) Int. Cl.: C08K 5/3415, C09B 57/00, C08L 77/00

(54) **In der Masse mit Diketopyrrolopyrrolpigmenten gefärbte Polyamide**
Mass coloured polyamide with diketo-pyrrolopyrrole pigments
Polyamide coloré dans sa masse à l'aide de pigments de dicétopyrrolopyrole

(30) Priorität: 20.07.1993 CH 2186/93
(43) Veröffentlichungstag der Anmeldung: 25.01.1995
(73) Patentinhaber: Ciba Specialty Chemicals Holding Inc., 4057 Basel (CH)
(72) Erfinder: Wallquist, Olof, Dr., CH-1723 Marly (CH); Lamatsch, Bernd, Dr., CH-1723 Marly (CH)

(56) Entgegenhaltungen:
- EP-A- 0 061 426
- EP-A- 0 094 911
- EP-A- 0 133 156
- EP-A- 0 542 669

## Beschreibung

Die vorliegende Erfindung betrifft das Massefärben von synthetischen Polyamiden mit Carbamoylgruppen enthaltenden Diketopyrrolopyrrolpigmenten.

Das Massefärben von synthetischen Polyamiden stellt an die verwendeten Farbmittel höhere Anforderungen als das Massefärben anderer Kunststoffe. Die Schmelzpunkte der synthetischen Polyamide liegen entscheidend höher und auch die chemische Reaktivität der geschmolzenen Polyamide, insbesondere des Polyamids 6,6, ist wesentlich grösser, so dass die Hitzestabilität der verwendeten Farbmittel ausserordentlich gut sein muss. Es gibt wenige Pigmente, welche diesen hohen Anforderungen genügen, insbesondere wenn zusätzlich auch eine hohe Lichtbeständigkeit verlangt wird.

Die erfindungsgemäss zum Massefärben von synthetischen Polyamiden verwendeten Carbamoylgruppen enthaltenden Diketopyrrolopyrrole besitzen, in anderen Kuststoffen ausgefärbt, im Vergleich zu anderen bekannten Diketopyrrolopyrrolpigmenten, wie sie z.B. aus den US-Patenten 4 415 685 und 4 579 949 bekannt sind, keine aussergewöhnlichen Eigenschaften. Ganz überraschend wurde nun aber gefunden, dass sie in synthetischen Polyamiden eine unerwartet bessere Hitzestabilität und eine ganz hervorragende Lichtbeständigkeit aufweisen.

Die vorliegende Erfindung betrifft demnach in der Masse gefärbtes synthetisches Polyamid enthaltend als Pigment mindestens ein Diketopyrrolopyrrolpigment der Formel 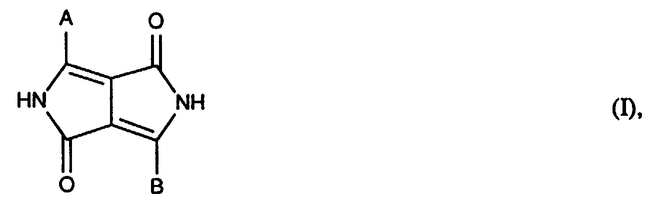 worin A und B unabhängig voneinander einen Rest der Formel 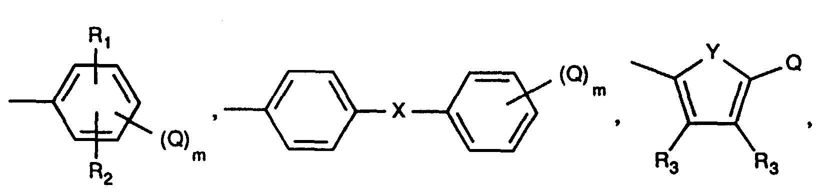 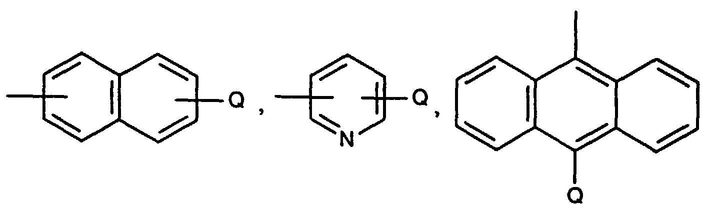 oder 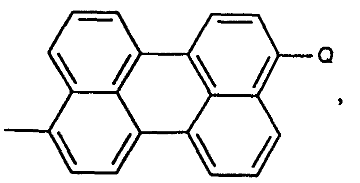 bedeuten, worin
Q eine Gruppe -CONH₂ bedeutet,
m 1 oder 2 ist,
R₁ und R₂ unabhängig voneinander Wasserstoff, Cl, Br, CH₃ oder C₂H₅ bedeuten,
R₃ Wasserstoff, CH₃, C₂H₅ oder Phenyl ist,
X eine direkte Bindung, -O-, -S-, -SO₂-, -CH=CH-, -CH₂- oder -C(CH₃)₂- und
Y -O- oder -S- bedeuten.

Besonders geeignet sind Diketopyrrolopyrrolpigmente der Formel I, worin A und B gleich sind und einen Rest der Formel 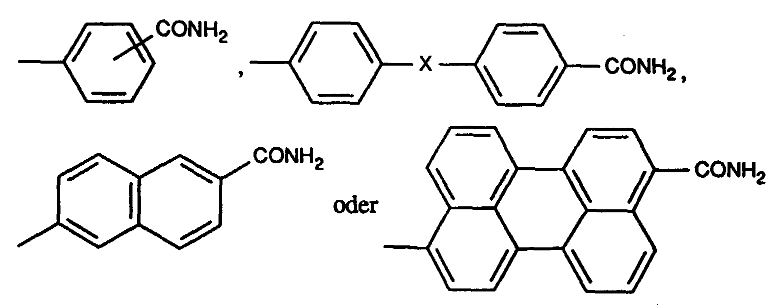 bedeuten, worin X eine direkte Bindung oder -O- ist.

Bevorzugt werden Diketopyrrolopyrrolpigmente der Formel I, worin A und B gleich sind und einen Rest der Formel 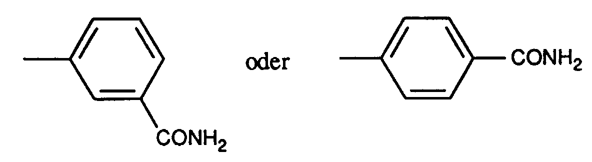 bedeuten.

Die erfindungsgemäss einzusetzenden Pigmenten können in Analogie zu allgemein bekannten Methoden, zweckmässig durch Versetzen von Verbindungen der Formel I, worin Q CN bedeutet, mit konzentrierter Schwefelsäure, hergestellt werden.

Als synthetische Polyamide kommen für das vorliegende Verfahren die Polyamide in Betracht, wie sie beispielsweise aus ε-Caprolactam (Perlon®, Nylon® 6) aus ω-Aminoundecansäure (Rilsan®), aus Hexamethylendiamin und Adipinsäure (Nylon® 6,6) oder aus analogen Ausgangsstoffen herstellbar sind. Ferner kommen auch Mischpolyamide in Betracht, beispielsweise aus ε-Caprolactam und Hexamethylendiamin und Adipinsäure.

Die erfindungsgemäss in Betracht gezogenen Pigmente werden nach bekannten Verfahren in fester Form oder in einer Suspension mit dem Polyamid vermischt und die erhaltene Mischung gegebenenfalls zwischengetrocknet.

Bevorzugt werden die zu färbenden Polyamide in Form von Pulvern, Körnern oder Schnitzeln mit dem trockenen Pigment als Pulver trockenbeschichtet (aufgepudert), d.h. mechanisch derart vermischt, dass die Oberfläche dieser Teilchen mit einer Schicht des Pigments überzogen ist. Das Pigment liegt vorteilhaft in fein verteilter Form vor. Anstelle des reinen Pigments kann man in vielen Fällen mit Vorteil Präparate verwenden, die neben dem Pigment einen thermostabilen und mit Polyamid verträglichen Trägerstoff enthalten, vorzugsweise ein Ca- oder Mg-Salz einer höheren Fettsäure, beispielsweise der Stearin- oder Behensäure, ferner Polyäthylen, Polystyrol, Polyester und selbstverständlich Polyamide oder Gemische davon. Derartige Trägerstoffe sind beispielsweise in US-PS-4 093 584, US-PS-4 279 802, GB-PS-1 398 352 und CH-PS-599 322 beschrieben. Diese Präparate in Granulatform können mit ungefärbtem Polyamidgranulat gemischt und weiterverarbeitet werden.

Die das Pigment enthaltenden Polyamidteilchen werden geschmolzen und nach bekannten Verfahren versponnen oder sonstwie, beispielsweise zu Folien oder anderen Formteilen, beispielsweise Spritzgussartikeln (Engineering Plastics), verformt.

Man kann das Pigment auch in das geschmolzene Polyamid vor der Spinndüse zudosieren (Injektionsverfahren) und dieses anschliessend verspinnen bzw. verformen.

Das gefärbte Polyamid enthält zweckmässig 0,01 bis 10 Gew.%, bevorzugt 0,1 bis 3 Gew.% eines erfindungsgemäss einzusetzenden Pyrrolopyrrolpigment der Formel I.

Man erhält gleichmässig gefärbte Gegenstände, die sich durch eine hohe Licht-, Shampoo-, Nass-, Reib-, Chlorax-, Trockenreinigungs- und insbesondere Hitzebeständigkeit, in gewissen Fällen durch ein hohes IR-Remissionsvermögen und ferner durch gute Textileigenschaften wie Reissfestigkeit und Dehnung oder im Falle von Formteilen durch eine gute Formbeständigkeit auszeichnen.

Die erfindungsgemäss in Betracht gezogenen Pigmente sind dank ihrer in der Polyamidschmelze guten Verteilbarkeit im gefärbten Material gleichmässig und fein verteilt.

Die nachfolgenden Beispiele erläutern die Erfindung. Teile bedeuten dabei, sofern nichts anderes angegeben wird, Gewichtsteile.

### Beispiel 1 :

In 100 Volumenteilen konz. Schwefelsäure (96 %) werden bei Raumtemperatur unter Rühren 10 Teile getrocknetes und gemahlenes Pigment der Formel 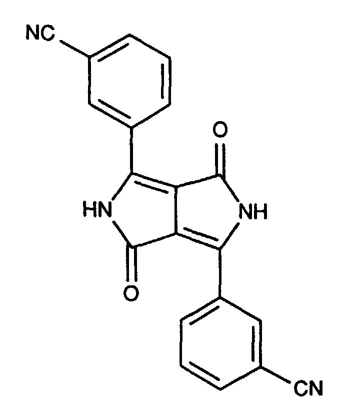 eingetragen. Innert 10 Minuten entsteht eine dunkelrote Lösung, die 16 Stunden bei Raumtemperatur gerührt und dann auf 800 Volumenteile Eis (Schüttvolumen) gegossen wird. Die erhaltene Suspension wird bis zum vollständigen Schmelzen des Eises mit der Zahnscheibe gerührt und dann filtriert. Der Rückstand wird mit Wasser neutral gewaschen, in 240 Volumenteilen N-Methylpyrrolidon suspendiert und durch sechsstündiges Erhitzen auf 175°C unter gleichzeitigem Abdestillieren des anhaftenden Wassers rekristallisiert. Nach Filtration, Nachwaschen mit Methanol und Gefriertrocknung, erhält man 8,5 Teile (78 % d.Th.) des Pigments der Formel

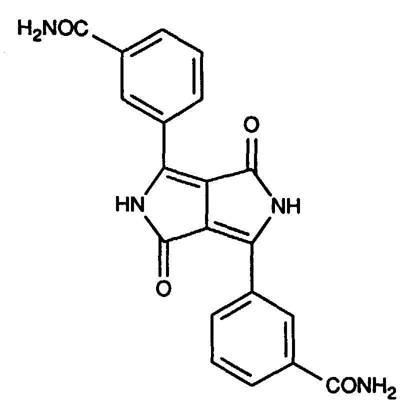

| Analyse | C | H | N |
|---|---|---|---|
| Berechnet | 64,17% | 3,77% | 14,97% |
| Gefunden | 64,34% | 3,90% | 14,55% |

### Beispiel 2:

In 100 Volumenteile konz. Schwefelsäure (96%) werden bei Raumtemperatur 10 Teile getrocknetes und gemahlenes Pigment der Formel 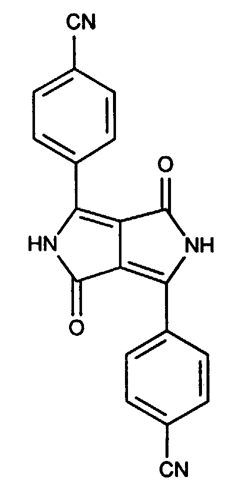 eingetragen. Innert 15 Minuten entsteht eine dunkelrote Lösung, die 18 Stunden bei Raumtemperatur gerührt und dann auf 800 Volumenteile Eis (Schüttvolumen) gegossen wird. Die erhaltene Suspension wird bis zum vollständigen Schmelzen des Eises mit der Zahnscheibe gerührt und dann filtriert. Der Rückstand wird mit Wasser neutral gewaschen; nach Trocknung erhält man 10 Teile (92% d.Th.) des Pigments der Formel

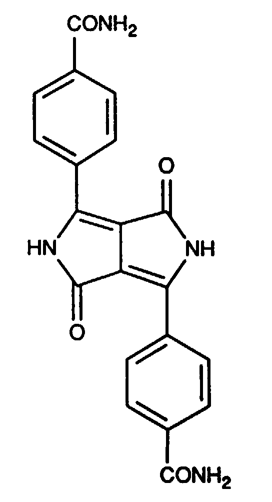

| Analyse | C | H | N |
|---|---|---|---|
| Berechnet | 62,66% | 3,94% | 14,61% |
| Gefunden | 62,75% | 4,39% | 14,76% |

### Beispiel 3:

In 100 Volumenteile konz. Schwefelsäure (96%) werden bei Raumtemperatur 5 Teile getrocknetes und gemahlenes Pigment der Formel 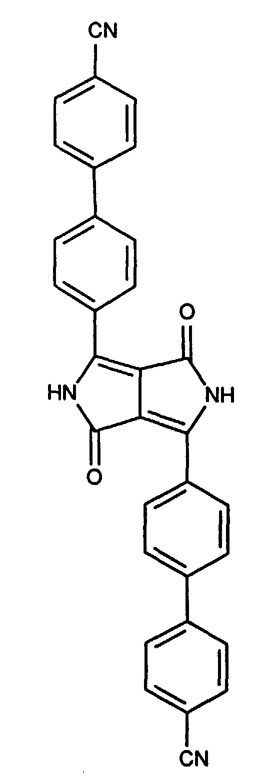 eingetragen. Innert 30 Minuten entsteht eine blauviolette Lösung, die 18 Stunden bei Raumtemperatur gerührt und dann auf 400 Volumenteile Eis/Wasser gegossen wird. Die erhaltene Suspension wird bis zum vollständigen Schmelzen des Eises mit der Zahnscheibe gerührt und dann filtriert. Der Rückstand wird mit Wasser neutral gewaschen; nach Gefriertrocknung erhält man 4,3 Teile (82% d.Th.) des Pigments der Formel

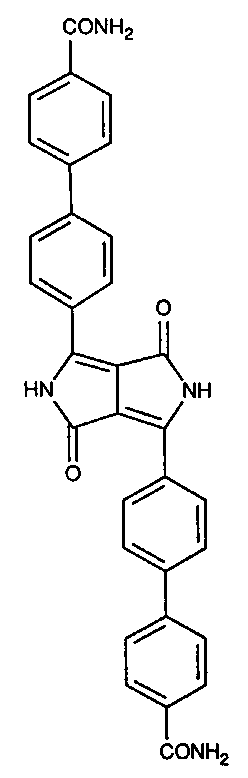

| Analyse | C | H | N |
|---|---|---|---|
| Berechnet | 71,76% | 4,33% | 10,46% |
| Gefunden | 71,55% | 4,50% | 9,99% |

### Beispiel 4:

In 40 Volumenteile konz. Schwefelsäure (96%) werden bei Raumtemperatur 2 Teile getrocknetes und gemahlenes Pigment der Formel 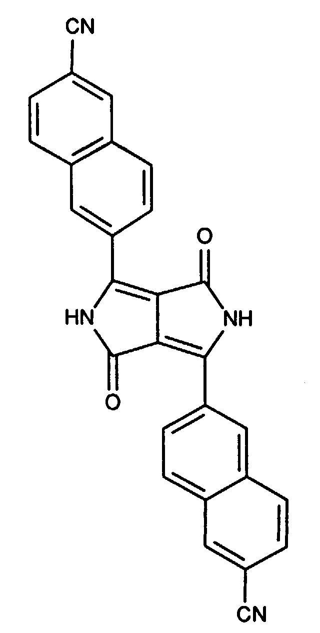 eingetragen. Innert 30 Minuten entsteht eine violette Lösung, die 22 Stunden bei Raumtemperatur gerührt und dann auf 600 Volumenteile Eis (Schüttvolumen) gegossen wird. Die erhaltene Suspension wird bis zum vollständigen Schmelzen des Eises mit der Zahnscheibe gerührt und dann filtriert. Der Rückstand wird mit Wasser neutral gewaschen.
Nach Trocknung erhält man 2,15 Teile (99% d.Th.) des Pigments der Formel

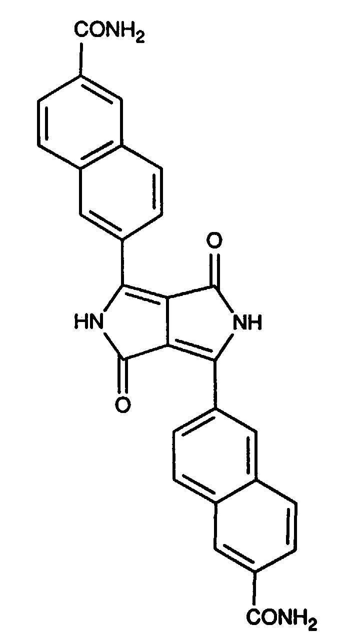

### Beispiel 5:

Die Synthese des Pigments wird wie in Beispiel 1 durchgeführt. Der Rückstand der Filtration wird ebenfalls mit Wasser neutral gewaschen, in 160 Volumenteilen N-Methylpyrrolidon suspendiert und durch sechsstündiges Erhitzen im Autoklaven auf 260°C rekristallisiert. Nach Filtration, Nachwaschen mit Wasser und Trocknung erhält man 5,5 Teile (50% d.Th) desselben Pigments wie in Beispiel 1 in grobkristalliner Form.

### Beispiel 6:

975 Teile Polyamid 6,6 (®Ultramid AS 2500 S der Fa BASF AG) werden in Pulverform mit 25 Teilen des Pigments gemäss Beispiel 1 trocken gemischt und vakuumgetrocknet. Das so behandelte Polymer wird bei 280-295°C in einem Extruder geschmolzen und zu Fasern versponnen. Die orange gefärbten Fasern zeichnen sich durch hohe Lichtbeständigkeit aus.

## Patentansprüche

1. In der Masse gefärbtes synthetisches Polyamid enthaltend als Pigment mindestens ein Diketopyrrolopyrrolpigment der Formel 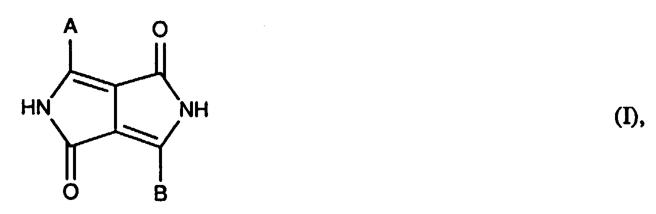 worin A und B unabhängig voneinander einen Rest der Formel 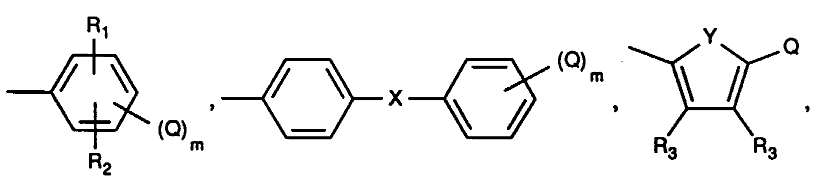 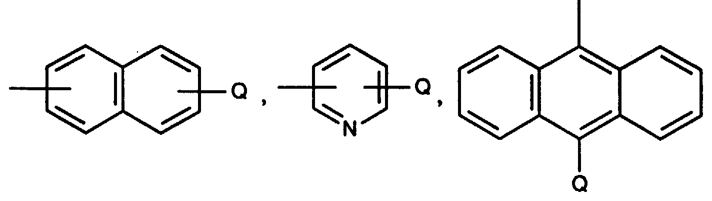 oder 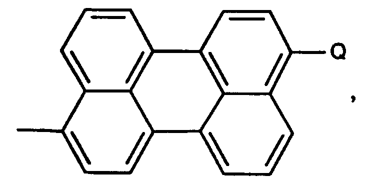 bedeuten, worin
Q eine Gruppe -CONH₂ bedeutet,
m 1 oder 2 ist,
R₁ und R₂ unabhängig voneinander Wasserstoff, Cl, Br, CH₃ oder C₂H₅ bedeuten,
R₃ Wasserstoff, CH₃, C₂H₅ oder Phenyl ist,
X eine direkte Bindung, -O-, -S-, -SO₂-, -CH=CH-, -CH₂- oder -C(CH₃)₂- und
Y -O- oder -S- bedeuten.

2. Polyamid gemäss Anspruch 1, enthaltend als Pigment mindestens ein Diketopyrrolopyrrol der Formel I, worin A und B gleich sind und einen Rest der Formel 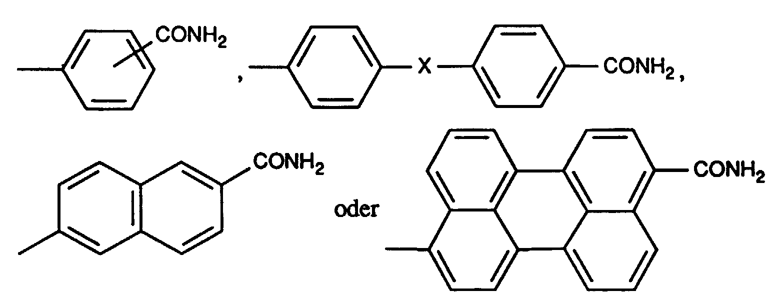 bedeuten, worin X eine direkte Bindung oder -O- ist.

3. Polyamid gemäss Anspruch 1, enthaltend als Pigment mindestens ein Diketopyrrolopyrrol der Formel I, worin A und B gleich sind und einen Rest der Formel 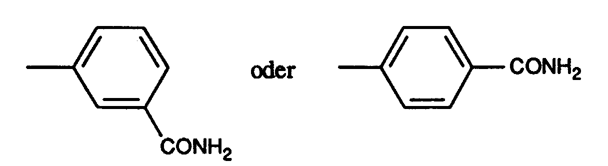 bedeuten.

## Claims

1. Mass-coloured synthetic polyamide comprising as pigment at least one diketopyrrolopyrrole pigment of formula 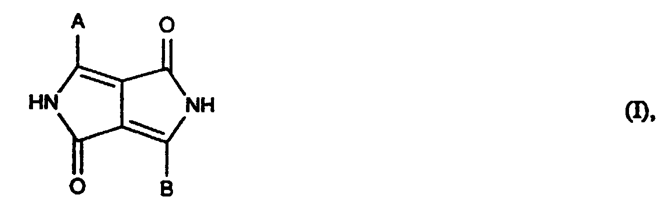 wherein A and B are each independently of the other a radical of formula 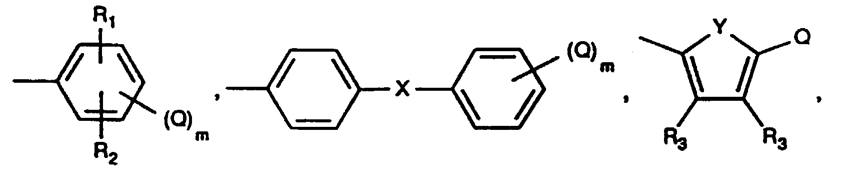 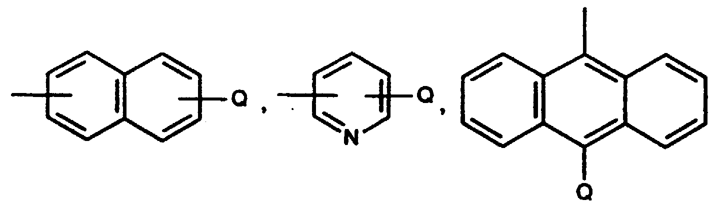 or 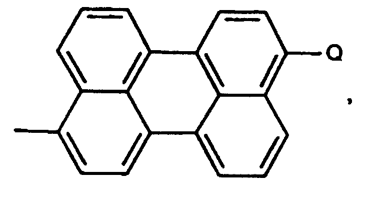 wherein
Q is a -CONH₂ group,
m is 1 or 2,
R₁ and R₂ are each independently of the other hydrogen, Cl, Br, CH₃ or C₂H₅,
R₃ is hydrogen, CH₃, C₂H₅ or phenyl,
X is a direct bond, -O-, -S-, -SO₂-, -CH=CH-, -CH₂- or -C(CH₃)₂-, and
Y is -O- or -S-.

2. A polyamide according to claim 1 comprising as pigment as least one diketopyrrolopyrrole of formula I wherein A and B are identical and are a radical of formula 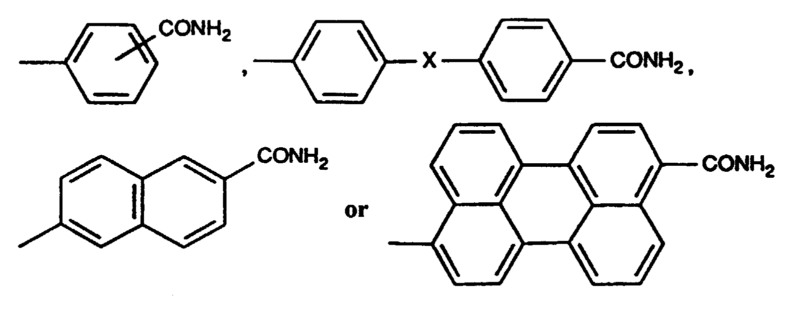 or
wherein X is a direct bond or -O-.

3. A polyamide according to claim 1 comprising as pigment at least one diketopyrrolopyrrole of formula I wherein A and B are identical and are a radical of formula

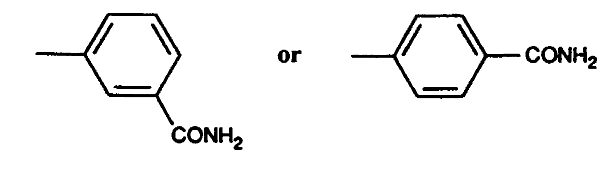

## Revendications

1. Polyamide synthétique pigmenté en masse contenant comme pigment au moins un pigment de dicétopyrrolopyrole de formule 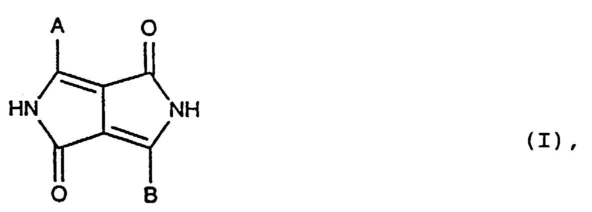 où A et B, indépendamment l'un de l'autre, représentent un reste de formule 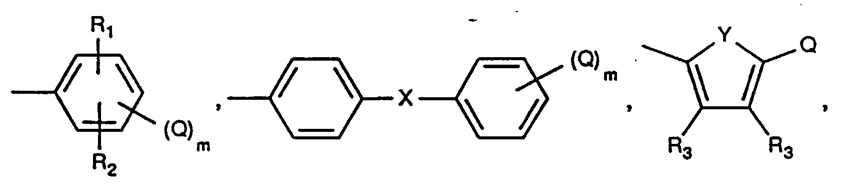 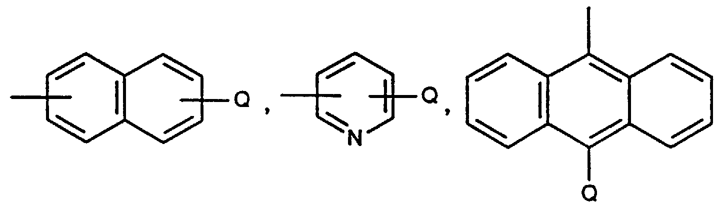 ou 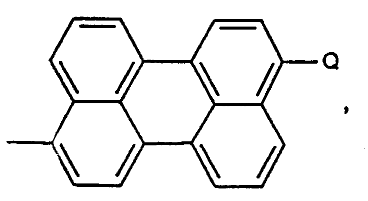 où
Q représente un groupe -CONH₂,
m vaut 1 ou 2,
R₁ ou R₂, indépendamment l'un de l'autre, représentent l'hydrogène, Cl, Br, CH₃ ou C₂H₅,
R₃ représente l'hydrogène, CH₃, C₂H₅ ou phényle,
X représente une liaison directe, -O-, -S-, -S-, -CH=CH-, -CH₂- ou -C(CH₃)₂- et
Y représente -O- ou -S-.

2. Polyamide selon la revendication 1, contenant comme pigment au moins un dicétopyrrolopyrole de formule I, où A et B sont identiques et représentent un reste de formule 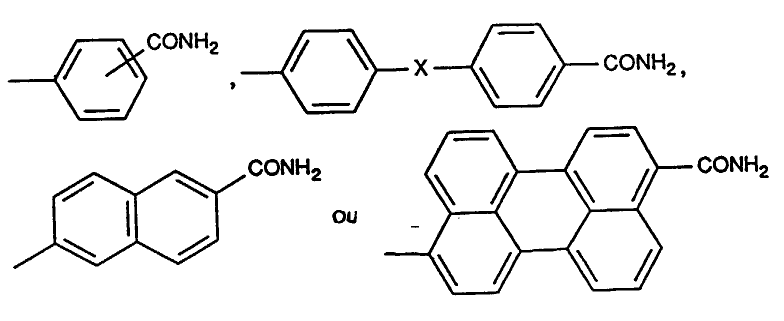 où X est une liaison directe ou -O-.

3. Polyamide selon la revendication 1, contenant comme pigment au moins un dicétopyrrolopyrole de formule I, où A et B sont identiques et représentent un reste de formule
